(19) Europäisches Patentamt / European Patent Office / Office européen des brevets

(11) **EP 3 284 730 B1**

(12) **EUROPEAN PATENT SPECIFICATION**

(45) Date of publication and mention
of the grant of the patent:
**15.06.2022 Bulletin 2022/24**

(21) Application number: **16779918.8**

(22) Date of filing: **30.03.2016**

(51) International Patent Classification (IPC):
*C03C 17/34* (2006.01)     *G02B 1/115* (2015.01)
*G02B 1/14* (2015.01)

(52) Cooperative Patent Classification (CPC):
**C03C 17/3417; B32B 9/00; B32B 17/06;
G02B 1/115; G02B 1/14;** C03C 2217/734;
C03C 2217/78; C03C 2218/365

(86) International application number:
**PCT/JP2016/060448**

(87) International publication number:
**WO 2016/167127 (20.10.2016 Gazette 2016/42)**

(54) **GLASS WITH ANTIREFLECTION FILM**

GLAS MIT ANTIREFLEXFILM

VERRE DOTÉ D'UN FILM ANTIREFLET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2015 JP 2015082624**

(43) Date of publication of application:
**21.02.2018 Bulletin 2018/08**

(73) Proprietor: **AGC Inc.
Tokyo 100-8405 (JP)**

(72) Inventors:
• **YAMADA, Tomohiro
Tokyo 100-8405 (JP)**
• **AOMINE, Nobutaka
Tokyo 100-8405 (JP)**
• **SUZUKI, Kenichi
Tokyo 100-8405 (JP)**

(74) Representative: **Müller-Boré & Partner
Patentanwälte PartG mbB
Friedenheimer Brücke 21
80639 München (DE)**

(56) References cited:
EP-A1- 3 085 673       WO-A1-2005/030663
WO-A1-2005/030663     WO-A1-2013/183457
WO-A1-2013/183457     WO-A1-2014/127868
JP-A- H03 162 943      JP-A- S57 124 301

**Description**

BACKGROUND OF THE INVENTION

1. Field of the Invention

The disclosure herein generally relates to a glass with antireflection film.

2. Description of the related art

A glass with antireflection film has a high transmittance. An application of the glass with antireflection film to an outdoor building such as a façade of a building, a store, an inner garden, and the like is expected.
The glass with antireflection film is configured by arranging a laminated film on at least one surface of a glass substrate. By properly selecting the respective layers configuring the laminated film, a light reflection reduction effect is obtained, and thereby a glass with antireflection film having a high transmittance can be obtained.
For example, Patent Document 1 discloses that a reflectance of a glass substrate is controlled by arranging, on a glass substrate, a laminated layer including a $TiO_2$ layer, an Al-doped $SiO_2$ layer, a $TiO_2$ layer, and an Al doped $SiO_2$ layer in this order.

[Citation List]

[Patent Literature]

[PTL 1] WO 2005/030663

SUMMARY OF THE INVENTION

[Technical Problem]

As described above, in the glass with antireflection film, by properly designing the configuration of the laminated film, it becomes possible to cause the glass substrate to exhibit a high transmittance.
However, it is impossible to say that laminated films of conventional glasses with antireflection film are excellent in alkali resistance.
Then, for example, there is a problem that in the case where the conventional glass with antireflection film is applied to an outdoor building, or the like, when the glass with antireflection film contacts water including an alkali component that is contained in a concrete or the like, the laminated film deteriorates. Moreover, when such degradation occurs in the laminated film, an excellent reflection reduction effect is not exhibited, and the reflectance of the glass with antireflection film may increase.
The present invention was made in view of such problem, and it is an object of the present invention to provide a glass with antireflection film that is significantly resistant to alkali compared with the related art.

[Solution to Problem]

The present invention provides a glass with antireflection film as from claim 1.

[Effect of Invention]

According to the present invention, a glass with antireflection film that is significantly resistant to alkali compared with the related art can be provided.

BRIEF DESCRIPTION OF THE DRAWINGS

[FIGURE 1] FIG. 1 is a diagram schematically depicting an example of a configuration of a first glass with antireflection film according to the present invention.
[FIGURE 2] FIG. 2 is a diagram schematically depicting an example of a configuration of a second glass with antireflection film according to the present invention.

[FIGURE 3] FIG. 3 is a diagram schematically depicting an example of a configuration of a third glass with antireflection film according to the present invention.

[FIGURE 4] FIG. 4 is a diagram schematically depicting an example of a configuration of a fourth glass with antireflection film according to the present invention.

[FIGURE 5] FIG. 5 is a diagram schematically depicting an example of a configuration of a fifth glass with antireflection film according to the present invention.

[FIGURE 6] FIG. 6 is a graph depicting an example of hydrogen concentration profile in a fourth layer obtained for Sample 1.

[FIGURE 7] FIG. 7 is a graph depicting an example of hydrogen concentration profile in a fourth layer obtained for Sample 5.

[FIGURE 8] FIG. 8 is a graph depicting a variation in a reflectance before and after an immersion treatment obtained for Sample 1.

[FIGURE 9] FIG. 9 is a graph depicting a variation in a reflectance before and after the immersion treatment obtained for Sample 2.

[FIGURE 10] FIG. 10 is a graph depicting a variation in a reflectance before and after the immersion treatment obtained for Sample 6.

[FIGURE 11] FIG. 11 is a graph depicting a variation in a reflectance before and after the immersion treatment obtained for Sample 7.

[FIGURE 12] FIG. 12 is a graph depicting a variation in a reflectance before and after the immersion treatment obtained for Sample 9.

## DETAILED DESCRIPTION OF THE PREFERRED EMBODIMENTS

There has been a problem that the conventional glass with antireflection film is not of sufficiently satisfactory resistance to alkali. Therefore, for example, in the case where the conventional glass with antireflection film is applied to an outdoor building, or the like, when the glass with antireflection film contacts water including an alkali component that is contained in a concrete or the like, the laminated film may deteriorate. Moreover, there is a problem that when such degradation occurs in the laminated film, the reflectance of the glass with antireflection film may increase.

With respect to the above, the present invention provides

a glass with antireflection film including a glass substrate having a first surface and a second surface; and a first laminated film arranged on the first surface of the glass substrate,
the first laminated film having an antireflection function,
the first laminated film having at least four layers including a first layer, a second layer, a third layer, and a fourth layer, in order of proximity to the first surface of the glass substrate,
the second layer being arranged adjacent to the first layer, and having a refractive index that is different from a refractive index of the first layer,
the third layer not including zirconia, being configured with a layer mainly including silica, and being arranged immediately below the fourth layer, and
the fourth layer being configured with zirconia-doped silica, and having average hydrogen concentration $C_{av}$ that is less than 10 atomic% wherein the first laminated film further includes a fifth layer between the second and the third layer, and wherein the fifth layer has a refractive index that is greater than the refractive index of the second layer and is greater than a refractive index of the third layer.

In the present application, "mainly including a material 'A'" means that an intended layer includes at least 50 atomic% of the material 'A'.

The glass with antireflection film according to the present invention, as the fourth layer of the laminated film, includes a silica layer in which zirconia is doped (in the following, also referred to as a "$ZrO_2$ doped $SiO_2$ layer").

The $ZrO_2$ doped $SiO_2$ layer is significantly resistant to alkali. Therefore, in the glass with antireflection film according to the present invention, a $ZrO_2$ doped $SiO_2$ layer arranged as the fourth layer of the laminated film has a function as a protection film against alkali. Accordingly, even if the laminated film contacts water including an alkali component, the laminated film can be prevented significantly from deteriorating.

Especially, the $ZrO_2$ doped $SiO_2$ layer according to the present invention has a feature that average hydrogen concentration $C_{av}$ is less than 10 atomic%. When the hydrogen concentration is controlled in this way, the protection function of the laminated film by the $ZrO_2$ doped $SiO_2$ layer is further enhanced.

According to the inventors of the present application, the layer mainly including silica has a feature of being less resistant to alkali. Therefore, the layer mainly including silica cannot be used as an outermost layer of the laminated film. Moreover, even if the layer mainly including silica is arranged immediately below the outermost layer (protection layer) of the laminated film, it is not preferable to arrange the layer mainly including silica thereat.

However, in the present invention, the hydrogen concentration of the $ZiO_2$ doped $SiO_2$ is significantly controlled, and thereby the protection function is improved. Therefore, in the present invention, even if the layer mainly including silica is arranged immediately below the $ZrO_2$ doped $SiO_2$ layer, excellent resistance of the laminated film to alkali can be maintained.

According to the above-described feature, in the present invention, with the configuration in which the laminated film includes a layer mainly including silica immediately below the $ZrO_2$ doped $SiO_2$ layer, a glass with antireflection film being more significantly resistant to alkali than the related art can be provided.

In the present application, the average hydrogen concentration $C_{av}$ means a value obtained by measuring using a high resolution elastic recoil detection analysis (HR-ERDA) method. The HR-ERDA method is a method of measuring a distribution of hydrogen or the like in the depth direction by using a Rutherford backscattering spectrometry (RBS) apparatus.

The average hydrogen concentration $C_{av}$ of the fourth layer is obtained by depositing a carbon film of 5 nm on the laminated film, measuring hydrogen concentration in the depth direction by a HR-ERDA method, and averaging values obtained in a range of depth of 10 nm to 15 nm from the surface of the fourth layer. The carbon layer is to prevent the laminated film from becoming charged during measurement. Moreover, the reason why the values obtained in the range of depth of 10 nm to 15 nm from the surface are averaged is that, in a range less than 10 nm from the surface, due to an influence from an adjacent layer (e.g. the carbon film), an accurate concentration may not be obtained. Details of the method of evaluating the average hydrogen concentration $C_{av}$ by a HR-ERDA method will be described later.

(Glass with antireflection film (comparative

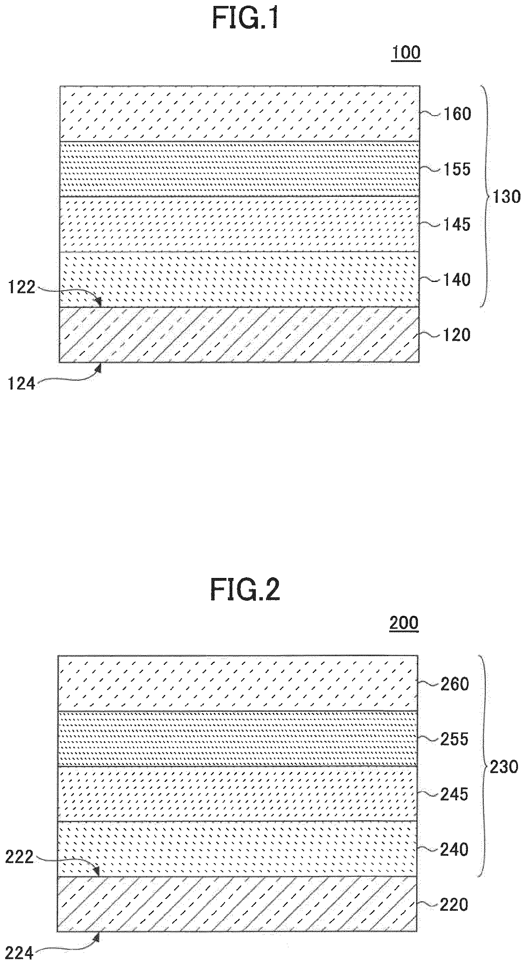

Next, with reference to FIG. 1, a configuration of a glass with antireflection film (in the following, referred to as a "first glass with antireflection film") will be described.

As illustrated in FIG. 1, the first glass with antireflection film 100 includes a glass substrate 120 and a laminated film 130.

The glass substrate 120 has a first surface 122 and a second surface 124, and the laminated film 130 is arranged on a first surface 122 side of the glass substrate 120.

In the example depicted in FIG. 1, the laminated film 130 is configured with four layers, i.e. includes a first layer 140, a second layer 145, a third layer 155, and a fourth layer 160.

The third layer 155 is configured with a layer mainly including silica. Moreover, the fourth layer 160 is configured with a zirconia doped silica layer, i.e. "$ZrO_2$ doped $SiO_2$ layer".

Because the fourth layer 160 also includes silica, terminologically the fourth layer 160 belongs to the category of the third layer 155 which "mainly includes silica". However, for the clarification of the layer configuration, in the following description, the third layer 155 that "mainly includes silica" will be defined not to include a $ZrO_2$ doped $SiO_2$ layer such as the fourth layer.

Moreover, the fourth layer 160 is not necessarily limited to a single layer, and may include a plurality of $SiO_2$ layers having different doped amounts of $ZrO_2$ from each other.

In the example illustrated in FIG. 1, the $ZrO_2$ doped $SiO_2$ layer, i.e. the fourth layer 160 is described as an outermost layer of the laminated film 130. The first glass with antireflection film 100 may have yet another one layer or two or more layers on the fourth layer 160. Because the fourth layer 160 is excellent in alkali resistance, the fourth layer 160 is preferable as an outermost layer.

The first layer 140 has a smaller refractive index than the second layer 145. For example, the first layer 140 has a refractive index within a range from 1.4 to 1.8, and the second layer 145 has a refractive index of 2.0 or more. Moreover, the second layer 145 has a refractive index greater than the third layer 155. The refractive index of the third layer 155 is typically within a range from 1.4 to 1.8. The first layer 140 may be configured with the same material as the third layer 155, i.e. a layer mainly including silica.

By using two layers 140, 145 respectively having different refractive indices from each other in the laminated film 130, described as above, it is possible to cause the first glass with antireflection film 100 to exhibit a low reflection characteristic.

Moreover, the first glass with antireflection film 100 has a $ZrO_2$ doped $SiO_2$ layer as the fourth layer 160. This layer is, as described above, adjusted so that average hydrogen concentration $C_{av}$ is less than 10 atomic%.

Then, in the first glass with antireflection film 100, an excellent alkali resistance can be exerted, even with a layer mainly including silica (third layer) 155 being arranged immediately below the fourth layer 160.

Note that in the first glass with antireflection film 100, the $ZrO_2$ doped $SiO_2$ layer with the average hydrogen concentration $C_{av}$ of less than 10 atomic% can be formed by, for example, making hydrogen concentration in an atmosphere sufficiently low upon depositing the fourth layer by a sputtering method or the like.

A method of making hydrogen concentration in an atmosphere sufficiently low includes, for example, baking of a deposition chamber before deposition, to exhaust sufficiently moisture and by-products such as hydrocarbon compounds absorbed on a wall surface of the deposition chamber, arranging a cold trap that absorbs moisture and by-products in the deposition chamber, heating preliminarily a base material, to degas moisture and by-products contained in the base material sufficiently, or the like.

In the first glass with antireflection film 100, because the first layer 140 has a smaller refractive index than the second layer 145, the first layer 140 will be referred to as a "low refractive index layer" 140, and the second layer 145 will be referred to as a "high refractive index layer" 145, and both layers will be referred to as a "pair of different refractive index layers".

In this case, in the example illustrated in FIG. 1, a number of the pair of different refractive index layers in the laminated film 130 is one. However, the number of the pair of different refractive index layers in the laminated film may be any integer as long as the number is greater than or equal to one. For example, the number of pairs of different refractive index layers may be two, three or the like. For example, when the number of pairs of different refractive index layers is two, the laminated film has a portion with low refractive index layer/high refractive index layer/low refractive index layer/high refractive index layer/ below the third layer 155. The first glass with antireflection film 100 may have the above-described configuration.

(Another glass with antireflection film (comparative

Next, with reference to FIG. 2, a configuration of another glass with antireflection film (in the following, referred to as a "second glass with antireflection film") will be described.

As illustrated in FIG. 2, the second glass with antireflection film 200 basically has the same configuration as the first glass with antireflection film 100 illustrated in FIG. 1. That is, the second glass with antireflection film 200 includes a glass substrate 220, and a laminated film 230 with a configuration of four layers arranged on a first surface 222 side of the glass substrate 220.

However, in the second glass with antireflection film 200, a layer configuration of the laminated film 230 is different from the first glass with antireflection film 100.

More specifically, in the second glass with antireflection film 200, the laminated film 230 includes a first layer 240, a second layer 245, a third layer 255, and a fourth layer 260. Moreover, the third layer 255 is configured with a layer mainly including silica, and the fourth layer 260 is configured with a $ZrO_2$ doped $SiO_2$ layer. Moreover, the first layer 240 has a refractive index greater than the second layer 245. For example, the first layer 240 has a refractive index of 2.0 or more, and the second layer 245 has a refractive index within a range from 1.4 to 1.8.

Also in the configuration of the above-described second glass with antireflection film 200, it is possible to cause the second glass with antireflection film 200 to exhibit a low reflection characteristic.

Moreover, the second glass with antireflection film 200 has a $ZrO_2$ doped $SiO_2$ layer which is adjusted so that average hydrogen concentration $C_{av}$ is less than 10 atomic% as the fourth layer 260. Therefore, in the second glass with antireflection film 200, an excellent alkali resistance can be exerted, even with the second glass with antireflection film 200 having a configuration that a layer mainly including silica (third layer) 255 is arranged immediately below the fourth layer 260.

In the second glass with antireflection film 200, a relation between the refractive indices of the first layer 240 and the second layer 245 is opposite to that in the case of the above-described first glass with antireflection film 100 illustrated in FIG. 1. That is, the laminated film 230 has a pair of a "high refractive index layer" (first layer 240) / a "low refractive index layer" (second layer 245) below the third layer 255.

In the present application, the pair of both the above-described layers will be also referred to as a "pair of different refractive index layers" in the same way as the case illustrated in FIG. 1.

According to the provisions in the example illustrated in FIG. 2, a number of the pair of different refractive index layers in the laminated film 230 is one. However, the number of the pair of different refractive index layers in the laminated film may be any integer, as long as the number is greater than or equal to one. For example, the number of pairs of different refractive index layers may be two, three or the like. For example, when the number of pairs of different refractive index layers is two, the laminated film 230 has a portion with high refractive index layer/low refractive index layer/high refractive index layer/low refractive index layer/ below the third layer 255. The second glass with antireflection film 200 may have the above-described configuration.

A glass with antireflection film according to the embodiment of the present invention)

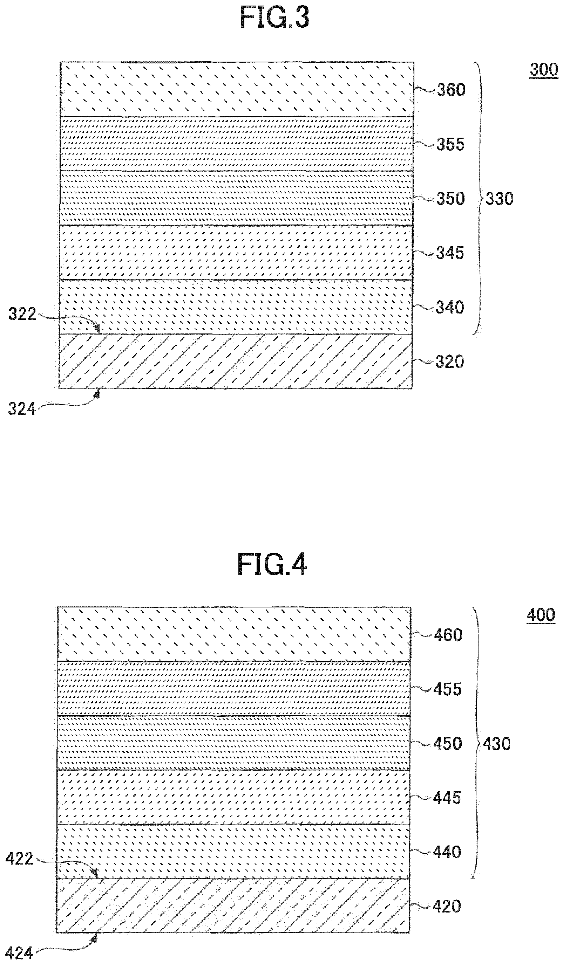

Next, with reference to FIG. 3, a configuration of a glass with antireflection film according to the embodiment of the present invention (in the following, referred to as a "third glass with antireflection film") will be described.

As illustrated in FIG. 3, the third glass with antireflection film 300 includes a glass substrate 320 and a laminated film 330.

The glass substrate 320 has a first surface 322 and a second surface 324, and the laminated film 330 is arranged on a first surface 322 side of the glass substrate 320.

In the example illustrated in FIG. 3, the laminated film 330 is configured with five layers, i.e. includes a first layer 340, a second layer 345, a fifth layer 350, a third layer 355, and a fourth layer 360, in order of proximity to the glass substrate. The third layer 355 is configured with a layer mainly including silica. Moreover, the fourth layer 360 is configured with a zirconia doped silica layer, i.e. a "$ZrO_2$ doped $SiO_2$ layer".

The first layer 340 has a refractive index greater than the second layer 345. For example, the first layer 340 has a refractive index greater than or equal to 2.0, and the second layer 345 has a refractive index within a range from 1.4 to 1.8. Moreover, the fifth layer 350 has a refractive index greater than the second layer 345 and the third layer 355. The fifth layer 350 may be the same material as the first layer 340.

Note that the refractive index of the third layer 355 is typically within a range from 1.4 to 1.8. The second layer 345 may be configured with the same material as the third layer 355, i.e. a layer mainly including silica.

By combining three layers 340, 345, and 350 having different refractive indices, described as above, it is possible to cause the third glass with antireflection film 300 to exhibit a low reflection characteristic.

Moreover, the third glass with antireflection film 300 includes, as a fourth layer 360, a $ZrO_2$ doped $SiO_2$ layer. This layer is, as described above, adjusted so that the average hydrogen concentration $C_{av}$ is less than 10 atomic%.

Therefore, in the third glass with antireflection film 300, an excellent alkali resistance can be exerted, even with a layer mainly including silica (third layer) 355 being arranged immediately below the fourth layer 360.

The third glass with antireflection film 300 has a group of "high refractive index layer" (first layer 340)/"low refractive index layer" (second layer 345)/"high refractive index layer" (fifth layer 350). This configuration unit can be expressed as

$$\text{Number of pairs of different refractive index layers} = 1.5,$$

following the notation of the above-described pairs of different refractive index layers.

Moreover, in the third glass with antireflection film 300, the number of pairs of different refractive index layers is not limited to 1.5. That is, a pair of "low refractive index layer"/"high refractive index layer" may be repeated once, twice or more, and arranged on the fifth layer 350.

For example, when a pair of "low refractive index layer"/"high refractive index layer" is arranged on the fifth layer 350, the number of pairs of different refractive index layers in the above-described laminated film is 1.5+1=2.5. Similarly, when a pair of "low refractive index layer"/"high refractive index layer" is repeated twice and arranged on the fifth layer 350, the number of pairs of different refractive index layers in the above-described laminated film is 1.5+2=3.5. The same applies hereafter.

Summarizing the above, in the glass with antireflection film according to the embodiment of the present invention, a number of pairs of different refractive index layers in the laminated film is not necessarily an integer greater than or equal to one, and the number of pairs of different refractive index layers may be 1, 1.5, 2, 2.5, .... That is, the number of pairs of different refractive index layers can be expressed by

$$\text{Number of pairs of different refractive index layers} = 1 + 0.5 \times N$$

where N is an integer greater than or equal to zero.

(Still another glass with antireflection film according to the embodiment of the present invention)

Next, with reference to FIG. 4, a configuration of still another glass with antireflection film according to the embodiment of the present invention (in the following, referred to as a "fourth glass with antireflection film") will be described.

As illustrated in FIG. 4, the fourth glass with antireflection film 400 basically has the same configuration as the third glass with antireflection film 300 illustrated in FIG. 3. That is, the fourth glass with antireflection film 400 includes a glass substrate 420, and a laminated film 430 with a configuration of five layers arranged on a first surface 422 side of the glass substrate 420.

However, in the fourth glass with antireflection film 400, a layer configuration of the laminated film 430 is different from the third glass with antireflection film 300.

More specifically, in the fourth glass with antireflection film 400, the laminated film 430 includes a first layer 440, a second layer 445, a fifth layer 450, a third layer 455, and a fourth layer 460. Moreover, the third layer 455 is configured with a layer mainly including silica, and the fourth layer 460 is configured with a $ZrO_2$ doped $SiO_2$ layer.

The first layer 440 has a refractive index smaller than the second layer 445. For example, the first layer 440 has a refractive index within a range from 1.4 to 1.8, and the second layer has a refractive index of 2.0 or more. Furthermore, the fifth layer 450 has a refractive index smaller than the second layer 445. For example, the fifth layer 450 has a refractive index within a range from 1.4 to 1.8.

Also in the configuration of the above-described fourth glass with antireflection film 400, it is possible to cause the fourth glass with antireflection film 400 to exhibit a low reflection characteristic.

Moreover, the fourth glass with antireflection film 400 has a $ZrO_2$ doped $SiO_2$ layer which is adjusted so that average hydrogen concentration $C_{av}$ is less than 10 atomic% as the fourth layer 460. Therefore, in the fourth glass with antireflection film 400, an excellent alkali resistance can be exerted, even with the fourth glass with antireflection film 400 having a configuration that a layer mainly including silica (third layer) 455 is arranged immediately below the fourth layer 460.

The fourth glass with antireflection film 400 has a group of a "low refractive index layer" (first layer 440) / a "high refractive index layer" (second layer 445) / a "low refractive index layer" (fifth layer 450) below the third layer 455. As described above, this configuration unit can be expressed as

Number of pairs of different refractive index layers = 1.5.

Also in the fourth glass with antireflection film 400, the number of pairs of different refractive index layers is not necessarily limited to 1.5. For example, the number of pairs of different refractive index layers may be 2.5, 3.5, 4.5, and the like.

(Respective members configuring the glass with antireflection film according to the present invention)

Next, respective members configuring the glass with antireflection film according to the present invention will be described in detail.

Note that in the following the respective configuration members will be described for the third glass with antireflection film 300 illustrated in FIG. 3 as an example. Therefore, upon showing each member, the reference numeral indicated in FIG. 3 will be used. However, it is obvious to a person skilled in the art that the following description can be applied also to the first glass with antireflection film 100 illustrated in FIG. 1, the second glass with antireflection film 200, and the fourth glass with antireflection film 400, by simply replacing terms.

(Glass substrate 32)

A glass substrate 320 has a first surface 322 and a second surface 324. A laminated film 330 is arranged on the first surface 322.

A composition of the glass substrate 320 is not particularly limited. The glass substrate 320 is, for example, an alkali-free glass, a soda lime glass, an alumino silicate glass, and the like.

The composition of a soda lime glass includes, for example, in per cent by mass in terms of oxide, $SiO_2$ of 60% to 75%; $Al_2O_3$ of 2% to 12%; MgO of 2% to 11%; CaO of 0% to 10%; SrO of 0% to 3%; BaO of 0% to 3%; $Na_2O$ of 10% to 18%; $K_2O$ of 0% to 8%; and $ZrO_2$ of 0% to 4% (sum of the above components is 100% or less and typically 95% or more). Moreover, the composition of an aluminosilicate glass includes, for example, in per cent by mass in terms of oxide, $SiO_2$ of 61% to 70%; $Al_2O_3$ of 1% to 18%; MgO of 0% to 15%; CaO of 0% to 5%; SrO of 0% to 1%; BaO of 0% to 1%; $Na_2O$ of 8% to 18%; $K_2O$ of 0% to 6%; $ZrO_2$ of 0% to 4%; and $B_2O_3$ of 0% to 8%.

Moreover, the glass substrate 320 may be physically tempered or chemically tempered. When the glass is chemically tempered, a plate thickness of the glass can be 1.5 mm or less.

(Laminated film 330)

The laminated film 330 includes a first layer 340, a second layer 345, a fifth layer 350, a third layer 355, and a fourth layer 360, in order of proximity to the glass substrate 320.

(First layer 340)

The first layer 340 has a refractive index greater than the second layer 345 that is arranged immediately above the first layer 340.

The first layer 340 may have a refractive index of 2.0 or more, for example. The refractive index of the first layer 340 may be, for example, 2.1 or more.

A material configuring such a "high refractive index layer" 340 may include, for example, titania, niobium oxide, zirconia, ceria, tantalum oxide, and the like, but is not limited to these.

A thickness of the first layer 340 is, for example, within a range from 5 nm to 20 nm, and preferably within a range from 7 nm to 17 nm.

(Second layer 345)

The second layer 345 has a refractive index smaller than the first layer 340 that is arranged immediately below the second layer 345. Moreover, the second layer 345 has a refractive index smaller than the fifth layer 350 that is arranged immediately above the second layer 345.

The second layer 345 may have a refractive index, for example, within a range from 1.4 to 1.8. The refractive index of the second layer 345 may be, for example, within a range from 1.45 to 1.7.

A material configuring such a "low refractive index layer" 345 may include, for example, silica, alumina, and the like, but is not limited to these. To silica, another element such as aluminum may be doped.

A thickness of the second layer 345 is, for example, within a range from 15 nm to 45 nm, and preferably within a range from 20 nm to 40 nm.

(Fifth layer 350)

The fifth layer 350 has a refractive index greater than the second layer 345 that is arranged immediately below the fifth layer 350.

The fifth layer 350 may have, for example, a refractive index of 2.0 or more. The refractive index of the fifth layer 350 may be, for example, 2.1 or more.

A material configuring such a "high refractive index layer" 350 may include, for example, titania, niobium oxide, zirconia, ceria, tantalum oxide, and the like, but is not limited to these. The fifth layer 350 may be, for example, configured with the same material as the first layer 340.

A thickness of the fifth layer 350 is, for example, within a range from 45 nm to 125 nm, and preferably within a range from 50 nm to 115 nm.

When a number of pairs of different refractive index layers is 2.5 or more, a pair of "low refractive index layer" / "high refractive index layer" is repeated at least once on the fifth layer 350.

Moreover, when the number of pairs of different refractive index layers is one, the fifth layer 350 is omitted. Furthermore, when the number of pairs of different refractive index layers is two, a "low refractive index layer" is arranged between the fifth layer 350 and the third layer 355.

(Third layer 355)

The third layer 355 is configured with a layer mainly including silica.

The third layer 355 may be, for example, silica in which a material "M" is doped. The material "M" may be selected from, for example, aluminum, boron, phosphorus, and the like. A refractive index of the third layer 355 is preferably within a range from 1.4 to 1.8.

A thickness of the third layer 355 is, for example, within a range from 0 nm to 110 nm, and is preferably within a range from 0 nm to 100 nm.

(Fourth layer 360)

As described above, the fourth layer 360 is configured with a $ZrO_2$ doped $SiO_2$ layer.

A thickness of the fourth layer is not particularly limited, but is, for example, within a range from 5 nm to 110 nm, and may be, for example, within a range from 10 nm to 100 nm.

A proportion of the thickness of the fourth layer 360 to a sum of the thicknesses of the third layer 355 and the fourth layer 360, $\theta$, is preferably 0.2 or more. By setting the proportion $\theta$ 0.2 or more, the alkali resistance of the laminated film 330 is further improved.

In the fourth layer 360, a doped amount of zirconia may be, in per cent by mol in terms of oxide, for example, within a range from 5 mol% to 50 mol%. When the doped amount of zirconia is less than 5 mol%, the enhancement effect of the alkali resistance characteristic for the laminated film 330 is reduced. Moreover, when the doped amount of zirconia is greater than 50 mol%, a problem of resistance to acid being reduced may occur.

The doped amount of zirconia is preferably within a range from 10 mol% to 33 mol%. The fourth layer 360 may include a small amount of a component other than silica and zirconia. The component includes yttria, alumina, or the like.

When the doped amount of zirconia is 5 mol%, the refractive index of the fourth layer 360 is about 1.50. When the doped amount of zirconia is 10 mol%, the refractive index of the fourth layer 360 is about 1.54. When the doped amount of zirconia is 33 mol%, the refractive index of the fourth layer 360 is about 1.69. When the doped amount of zirconia is 50 mol%, the refractive index of the fourth layer 360 is about 1.79.

The respective layers configuring the laminated film 330 may be arranged by any method. The respective layers may be deposited by, for example, a vapor deposition method, a sputtering method, a CVD (chemical vapor deposition) method and the like.

(Yet another glass with antireflection film according to the embodiment of the present invention)

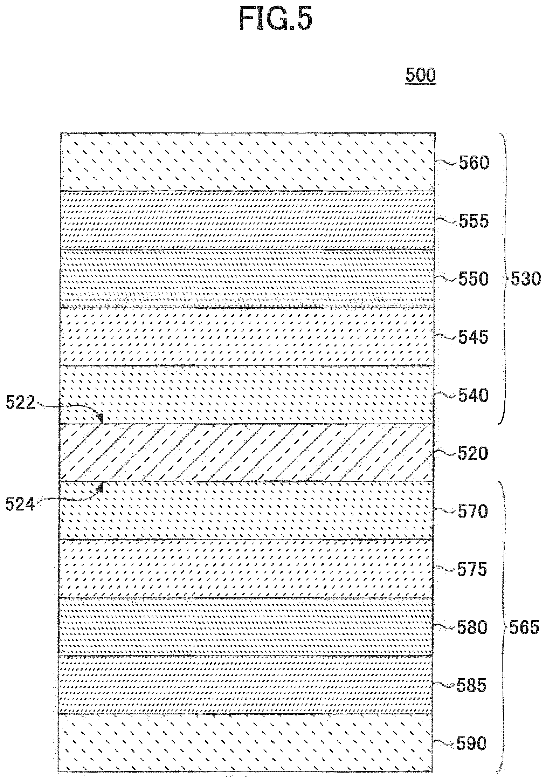

Next, with reference to FIG. 5, a configuration of yet another glass with antireflection film according to the embodiment of the present invention (in the following, referred to as a "fifth glass with antireflection film") will be described.

As illustrated in FIG. 5, the fifth glass with antireflection film 500 includes a glass substrate 520; a first laminated film 530; and a second laminated film 565.

The fifth glass with antireflection film 500 has same members as the third glass with antireflection film 300, illustrated in above-described FIG. 3. Therefore, in the fifth glass with antireflection film 500, for members that are the same as in the third glass with antireflection film 300, a reference numeral obtained by adding 200 to the reference numeral indicated in FIG. 3 is used.

However, the fifth glass with antireflection film 500 is different from the configuration of the above-described third glass with antireflection film, in that laminated films are arranged on both surfaces 522, 524 sides of the glass substrate 520.

More specifically, as illustrated in FIG. 5, on a first surface 522 side of the glass substrate 520, a first laminated film 530 is arranged, and a second laminated film 565 is arranged on a second surface 524 side of the glass substrate 520.

In the example, illustrated in FIG. 5, the first laminated film 530 is configured with five layers in total. The number of pairs of different refractive index layers is 1.5. That is, the first laminated film 530 includes a first layer 540 as a "high refraction index layer", a second layer 545 as a "low refraction index layer", and a fifth layer 550 as a "high refraction index layer". Moreover, the first laminated film 530 includes a third layer 555 and a fourth layer 560 which is immediately above the third layer 555.

The third layer 555 is configured with a layer mainly including silica. The fourth layer 560 is configured with a $ZiO_2$ doped $SiO_2$ layer.

Similarly, the second laminated film 565 is configured with five layers in total. The number of pairs of different refractive index layers is 1.5. That is, the second laminated film 565 includes a first layer 570 as a "high refraction index layer", a second layer 575 as a "low refraction index layer", a fifth layer 580 as a "high refraction index layer", a third layer 585 and a fourth layer 590 which is immediately above the third layer 585.

The third layer 585 is configured with a layer mainly including silica. The fourth layer 590 is configured with a $ZiO_2$ doped $SiO_2$ layer.

The second laminated film 565 may have the same configuration as the first laminated film 530.

In the fifth glass with antireflection film 500, each of the first laminated film 530 and the second laminated film 565 arranged on both sides of the glass substrate 520 has a pair of different refractive index layers. Therefore, in the fifth glass with antireflection film 500, a more excellent low reflection characteristic can be exhibited.

Also in the fifth glass with antireflection film 500, according to the fourth layer 560 existing as a protection layer for the first laminated film 530, and the fourth layer 590 existing as a protection layer for the second laminated film 565, the same effect as the above-described third glass with antireflection film 300, i.e. compared with the conventional glass with antireflection film, a significantly improved alkali resistance characteristic can be obtained.

In the example illustrated in FIG. 5, the first laminated film 530 has the same configuration as the laminated film 330 of the third glass with antireflection film 300 illustrated in FIG. 3. However, apart from this, the first laminated film 530 may have the same configuration as the laminated film 430 of the fourth glass with antireflection film 400, illustrated in FIG. 4.

Moreover, in the example illustrated in FIG. 5, in the fifth glass with antireflection film 500, the first laminated film 530 is configured with five layers, in total, including the first layer 540 to the fourth layer 560. However, this is merely an example. The number of layers configuring the first laminated film 530 is not particularly limited as long as the number is five layers or more.

For example, the first laminated film 530 may have a five layers structure (number of pairs of different refractive index layers is 1.5), such as the laminated film 330, 430 illustrated in FIG. 3 or FIG. 4. Alternatively, the first laminated film 530 may be configured with six layers or more (number of pairs of different refractive index layers is 2 or more).

Moreover, in the example illustrated in FIG. 5, the second laminated film 565 has the same layer configuration as the first laminated film 530. However, this is merely an example. The second laminated film 565 may have any configuration as long as the low reflection characteristic can be exhibited.

For example, the second laminated film 565 may have a configuration such as the laminated film 30, 130, 230, or 430, illustrated in above-described FIG. 1, FIG. 2, or FIG. 4.

Furthermore, the second laminated film 565 is not necessarily required to have an outermost layer 590 configured with a $ZrO_2$ doped $SiO_2$ layer. Any layer may be arranged as the outermost layer.

For example, in the case of assuming that the fifth glass with antireflection film 500 is used for a window glass of a building, on the indoor side, a flow of an alkali component from concrete due to rain is not likely to occur. Therefore, in the case of arranging the glass with antireflection film so that the side of the laminated film that does not include the fourth layer configured with a $ZrO_2$ doped $SiO_2$ layer is the indoor side, a phenomenon that such a laminated film is degraded by an alkali component is not likely to occur, and the low reflection characteristic of the glass with antireflection film can be prevented from being reduced.

However, in the case of arranging the fourth layers configured with $ZrO_2$ doped $SiO_2$ layers on both surfaces of the glass substrate, for whichever side is used for the outdoor side, the laminated film can be prevented significantly from being degraded by an alkali component.

## EXAMPLES

Next, examples of the present invention will be described. In the following description, Examples 1 - 5, and 9 are practical examples, and Examples 6 - 8 are comparative examples.

(Example 1)

According to the following method, a laminated film was configured on one surface of a glass substrate, and a sample for a glass with antireflection film (in the following, referred to as "Sample 1") was prepared.

Sample 1 was prepared as follows.

First, a glass substrate (soda lime glass) having a length of 25 mm, a width of 50 mm, and a thickness of 2 mm was prepared.

Next, by a sputtering method, on one surface of the glass substrate, a laminated film including five layers in total are formed. The laminated film has the following layer configuration, in order of proximity to the glass substrate:

First layer: $TiO_2$ layer, thickness of 12 nm;
Second layer: $SiO_2$ layer, thickness of 35 nm;
Fifth layer: $TiO_2$ layer, thickness of 105 nm;
Third layer: $SiO_2$ layer, thickness of 50 nm; and
Fourth layer: 90 mol% $SiO_2$ - 10 mol% $ZrO_2$ layer, thickness of 32 nm.

Among these, the first layer was deposited by a sputtering method under an atmosphere of $Ar+O_2$ (oxygen 8 volume%) using a $TiO_x$ target (x<2) as a target (product name TXO target by AGC Ceramics Co., Ltd.). A sputtering pressure was set to 0.37 Pa.

The second layer was deposited by a sputtering method under an atmosphere of $Ar+O_2$ (oxygen 60 volume%) using a Si target as a target. The sputtering pressure was set to 0.17 Pa.

The fifth layer was deposited by a sputtering method under an atmosphere of $Ar+O_2$ (oxygen 8 volume%) using the above-described $TiO_x$ target (x<2) as a target. The sputtering pressure was set to 0.37 Pa.

The third layer was deposited by a sputtering method under an atmosphere of $Ar+O_2$ (oxygen 60 volume%) using the above-described Si target as a target. The sputtering pressure was set to 0.17 Pa.

The fourth layer was deposited by a sputtering method under an atmosphere of $Ar+O_2$ (oxygen 60 volume%) using a Si target, to which Zr of 10 atomic% had been doped, as a target. The sputtering pressure was set to 0.12 Pa.

Note that the surface of the glass substrate on which a laminated film was not arranged, was subjected to an antireflection treatment (surface roughening treatment) thereon.

(Example 2)

Using the same method as Example 1, a sample for a glass with antireflection film (in the following, referred to as "Sample 2") was prepared. However, in Example 2, a laminated film has the following layer configuration:

First layer: $TiO_2$ layer, thickness of 12 nm;
Second layer: $SiO_2$ layer, thickness of 35 nm;
Fifth layer: $TiO_2$ layer, thickness of 105 nm;
Third layer: $SiO_2$ layer, thickness of 15 nm; and
Fourth layer: 90 mol% $SiO_2$ - 10 mol% $ZrO_2$ layer, thickness of 66 nm.

(Example 3)

Using the same method as Example 1, a sample for a glass with antireflection film (in the following, referred to as "Sample 3") was prepared. However, in Example 3, a laminated film has the following layer configuration:

First layer: $TiO_2$ layer, thickness of 11 nm;
Second layer: $SiO_2$ layer, thickness of 30 nm;
Fifth layer: $TiO_2$ layer, thickness of 101 nm;
Third layer: $SiO_2$ layer, thickness of 35 nm; and
Fourth layer: 80 mol% $SiO_2$ - 20 mol% $ZrO_2$ layer, thickness of 42 nm.

The fourth layer was deposited by a sputtering method under an atmosphere of Ar+$O_2$ (oxygen 60 volume%) using a Si target, to which Zr of 20 atomic% had been doped, as a target. The sputtering pressure was set to 0.12 Pa.

(Example 4)

Using the same method as Example 1, a sample for a glass with antireflection film (in the following, referred to as "Sample 4") was prepared. However, in Example 4, a laminated film has the following layer configuration:

First layer: $TiO_2$ layer, thickness of 11 nm;
Second layer: $SiO_2$ layer, thickness of 30 nm;
Fifth layer: $TiO_2$ layer, thickness of 102 nm;
Third layer: $SiO_2$ layer, thickness of 50 nm; and
Fourth layer: 67 mol% $SiO_2$ - 33 mol% $ZrO_2$ layer, thickness of 25 nm.

The fourth layer was deposited by a sputtering method under an atmosphere of Ar+$O_2$ (oxygen 60 volume%) using a Si target, to which Zr of 33 atomic% had been doped, as a target. The sputtering pressure was set to 0.12 Pa.

(Example 5)

Using the same method as Example 1, a sample for a glass with antireflection film (in the following, referred to as "Sample 5") was prepared. However, in Example 5, similar laminated films were formed on both surfaces of the glass substrate, respectively. (Therefore, the glass substrate was not subjected to the antireflection treatment (surface roughening treatment).)

Both laminated films have the following layer configuration:

First layer: $TiO_2$ layer, thickness of 12 nm;
Second layer: $SiO_2$ layer, thickness of 35 nm;
Fifth layer: $TiO_2$ layer, thickness of 105 nm;
Third layer: $SiO_2$ layer, thickness of 50 nm; and
Fourth layer: 90 mol% $SiO_2$ - 10 mol% $ZrO_2$ layer, thickness of 32 nm.

(Example 6)

Using the same method as Example 1, a sample for a glass with antireflection film (in the following, referred to as "Sample 6") was prepared. However, in Example 6, the same laminated films were formed on both surfaces of the glass substrate, respectively. (Therefore, the glass substrate was not subjected to the antireflection treatment (surface roughening treatment).)

Both laminated films have the following layer configuration:

First layer: $TiO_2$ layer, thickness of 12 nm;
Second layer: $SiO_2$ layer, thickness of 31 nm;
Fifth layer: $TiO_2$ layer, thickness of 99 nm;
Third layer: $SiO_2$ layer, thickness of 50 nm; and
Fourth layer: 90 mol% $SiO_2$ - 10 mol% $ZrO_2$ layer, thickness of 30 nm.

(Example 7)

Using the same method as Example 1, a sample for a glass with antireflection film (in the following, referred to as "Sample 7") was prepared. However, in Example 7, a laminated film has the following layer configuration:

First layer: TiO$_2$ layer, thickness of 11 nm;
Second layer: SiO$_2$ layer, thickness of 30 nm;
Fifth layer: TiO$_2$ layer, thickness of 103 nm;
Third layer: SiO$_2$ layer, thickness of 17 nm; and
Fourth layer: 90 mol% SiO$_2$ - 10 mol% ZrO$_2$ layer, thickness of 60 nm.

(Example 8)

Using the same method as Example 1, a sample for a glass with antireflection film (in the following, referred to as "Sample 8") was prepared. However, in Example 8, a laminated film has the following layer configuration:

First layer: TiO$_2$ layer, thickness of 12 nm;
Second layer: SiO$_2$ layer, thickness of 35 nm;
Fifth layer: TiO$_2$ layer, thickness of 105 nm;
Third layer: SiO$_2$ layer, thickness of 70 nm; and
Fourth layer: 90 mol% SiO$_2$ - 10 mol% ZrO$_2$ layer, thickness of 15 nm.

(Example 9)

Using the same method as Example 1, a sample for a glass with antireflection film (in the following, referred to as "Sample 9") was prepared. However, in Example 9, a laminated film has the following layer configuration:

First layer: TiO$_2$ layer, thickness of 12 nm;
Second layer: SiO$_2$ layer, thickness of 35 nm;
Fifth layer: TiO$_2$ layer, thickness of 105 nm;
Third layer: SiO$_2$ layer, thickness of 70 nm; and
Fourth layer: 90 mol% SiO$_2$ - 10 mol% ZrO$_2$ layer, thickness of 15 nm.

Note that in preparation of samples in Examples 1 to 5, and Example 9, a similar deposition apparatus was used, and the deposition was started after exhausting the deposition apparatus.
In preparation of samples in Examples 6 to 8, compared with the above-described Examples 1 to 5 and Example 9, an exhausting time for the deposition apparatus until starting deposition was short.
TABLE 1, in the following, shows the layer configurations of respective samples as a whole. Note that in fields of film configurations, a proportion of the thickness of the fourth layer with respect to the sum of the thicknesses of the third layer and the fourth layer is also shown.

[TABLE 1]

| example | film configuration | | | | | thickness of 4th layer / (thickness of 3rd layer + 4th layer) | average hydrogen concentration C$_{av}$ (atomic%) | index $\Sigma|\Delta R|$ |
| | 1st layer | 2nd layer | 5th layer | 3rd layer | 4th layer | | | |
|---|---|---|---|---|---|---|---|---|
| 1 | TiO$_2$ (12 nm) | SiO$_2$ (35 nm) | TiO$_2$ (105 nm) | SiO$_2$ (50 nm) | 90SiO$_2$-10ZrO$_2$ (32nm) | 0.39 | 6.8 | 9.4 |
| 2 | TiO$_2$ (12 nm) | SiO$_2$ (35 nm) | TiO$_2$ (105 nm) | SiO$_2$ (15 nm) | 90SiO$_2$-10ZrO$_2$ (66nm) | 0.81 | 7.8 | 4.8 |
| 3 | TiO$_2$ (11 nm) | SiO$_2$ (30 nm) | TiO$_2$ (101 nm) | SiO$_2$ (35 nm) | 80SiO$_2$-20ZrO$_2$ (42nm) | 0.55 | 6.8 | 23.3 |

(continued)

| example | film configuration | | | | | | average hydrogen concentration $C_{av}$ (atomic%) | index $\Sigma|\Delta R|$ |
| --- | --- | --- | --- | --- | --- | --- | --- | --- |
| | 1st layer | 2nd layer | 5th layer | 3rd layer | 4th layer | thickness of 4th layer / (thickness of 3rd layer + 4th layer) | | |
| 4 | $TiO_2$ (11 nm) | $SiO_2$ (30 nm) | $TiO_2$ (102 nm) | $SiO_2$ (50 nm) | $67SiO_2$-$33ZrO_2$ (25nm) | 0.33 | <10 | 28.8 |
| 5* | $TiO_2$ (12 nm) | $SiO_2$ (35 nm) | $TiO_2$ (105 nm) | $SiO_2$ (50 nm) | $90SiO_2$-$10ZrO_2$ (32nm) | 0.39 | 6.8 | 19.4 |
| 6* | $TiO_2$ (12 nm) | $SiO_2$ (31 nm) | $TiO_2$ (99 nm) | $SiO_2$ (50 nm) | $90SiO_2$-$10ZrO_2$ (30nm) | 0.38 | 10.6 | 2260.8 |
| 7 | $TiO_2$ (11 nm) | $SiO_2$ (30 nm) | $TiO_2$ (103 nm) | $SiO_2$ (17 nm) | $90SiO_2$-$10ZrO_2$ (60nm) | 0.78 | >10 | 2681.6 |
| 8 | $TiO_2$ (12 nm) | $SiO_2$ (35 nm) | $TiO_2$ (105 nm) | $SiO_2$ (70 nm) | $90SiO_2$-$10ZrO_2$ (15nm) | 0.18 | >10 | 3067.0 |
| 9 | $TiO_2$ (12 nm) | $SiO_2$ (35 nm) | $TiO_2$ (105 nm) | $SiO_2$ (70 nm) | $90SiO_2$-$10ZrO_2$ (15nm) | 0.18 | <10 | 174.9 |
| Note that * indicates arranging multi layered films on both surfaces, respectively. | | | | | | | | |

(Evaluation)

(Measurement of hydrogen concentration)

Using Samples 1 to 9 prepared by the above-described methods, hydrogen concentration included in the fourth layer was measured.

For the measurement of hydrogen concentration, a high resolution RBS analysis system (HRBS500 by Kobe Steel, Ltd.) was used, and the analysis was performed by an HR-ERDA method. Note that hydrogen concentration was calibrated by measuring a DLC (Diamond Like Carbon) thin film sample with known concentration.

Configuration parameters upon measurement are as follows:

Energy of incident ion: 480 keV;
Ion species: $N^+$;
Configured scattering angle: 30°;
Incident angle: 70° with respect to a normal line of a sample surface;
Electric current: about 2 nA; and
Amount of irradiation: about 1.6 μC.

For prevention of static charge upon measurement, a carbon film of about 5 nm was deposited on the fourth layer of each sample before measurement.

The hydrogen concentration was calculated as average hydrogen concentration $C_{av}$ by averaging values of depth within 15 nm to 20 nm (range of depth within 10 nm to 15 nm from a surface of the fourth layer), in the results of measurement (a graph indicating a relation between a depth distance from a surface and hydrogen intensity), in order to avoid an influence from a carbon film.

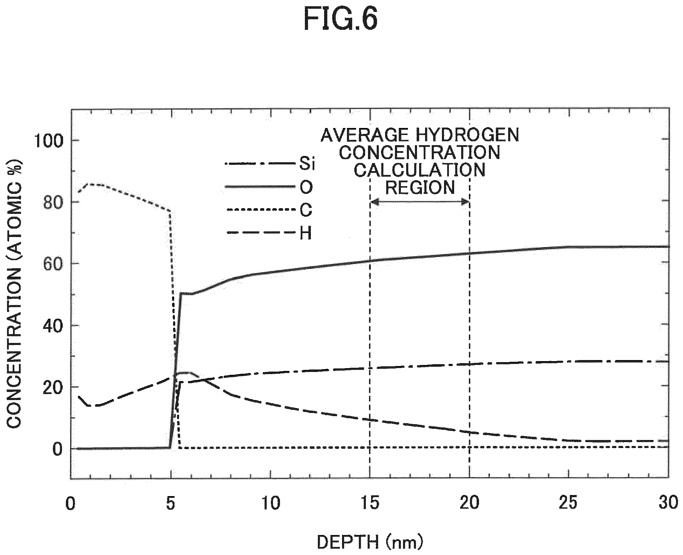

FIG. 6 illustrates, as an example, results of measurement obtained for Sample 1. From the results, it is found that in the case of Sample 1, a profile of hydrogen shows a behavior of gradually decreasing toward the depth direction. The hydrogen concentration was less than 10 atomic%, even at highest value, for depth positions of 15 nm or greater.

In the case of Sample 1, the average hydrogen concentration $C_{av}$ was 6.8 atomic%.

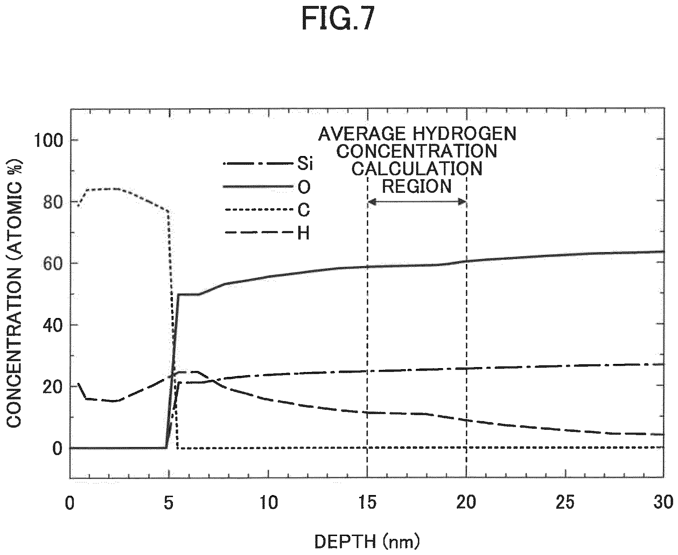

Moreover, FIG. 7 illustrates, as another example, results of measurement obtained for Sample 6. In the case of Sample 6, the average hydrogen concentration $C_{av}$ was 10.6 atomic%.

In the field of "average hydrogen concentration $C_{av}$" in above-described TABLE 1, the average hydrogen concentration $C_{av}$ obtained for the respective samples is shown.

From the results, it was found that in any case of Samples 1 to 5 and Sample 9, the average hydrogen concentration $C_{av}$ was less than 10 atomic%. However, it was found that in any case of Samples 6 to 8, the average hydrogen concentration $C_{av}$ was greater than 10 atomic%.

(Alkali resistance test)

Using Samples 1 to 9 prepared by the above-described method, an alkali resistance test was performed. The alkali resistance test was implemented as follows.

Each sample was irradiated with light from a side on which a laminated film was arranged (for Sample 5 and Sample 6, any one side). By a spectrophotometer, a reflectance (initial reflectance) for each wavelength was measured.

Next, each sample was immersed for two hours in an aqueous solution of NaOH of a concentration of 0.1 $kmol/m^3$ that was heated at 90 °C. Afterwards, the sample was taken out from the aqueous solution, washed with pure water, and dried.

Using the dried sample, the same measurement as that before the immersion treatment was performed, and a reflectance at each wavelength (reflectance after treatment) was measured.

At each sample, the initial reflectance and the reflectance after treatment were compared. Upon the comparison, within a wavelength range of 380 nm to 780 nm, at a pitch of 2 nm, an absolute value of a difference between the initial reflectance and the reflectance after treatment $|\Delta R|$ was obtained. The absolute values were accumulated and an index $\Sigma|\Delta R|$ was obtained.

The index $\Sigma|\Delta R|$ becomes an index for evaluating quantitively a resistance of a sample to alkali. That is, the smaller the index $\Sigma|\Delta R|$ is, the smaller a difference between reflectances before and after the immersion treatment is. It can be said that in such a sample the resistance to alkali is excellent.

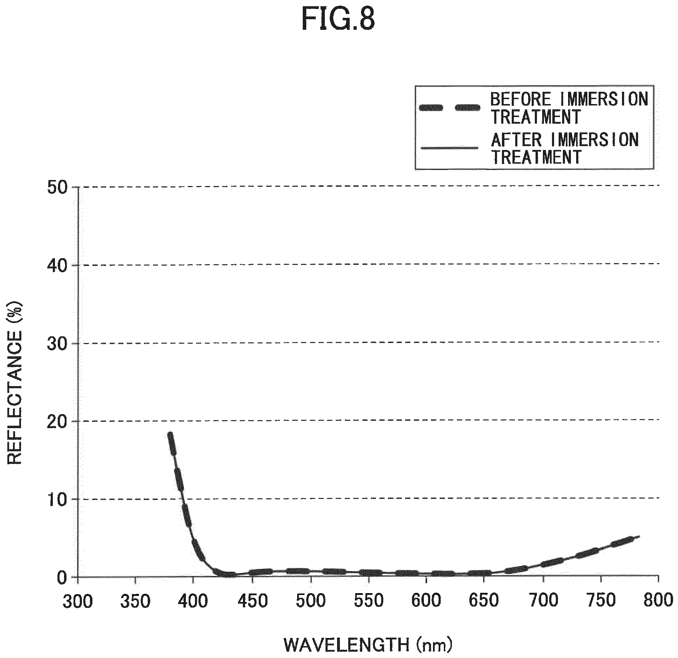

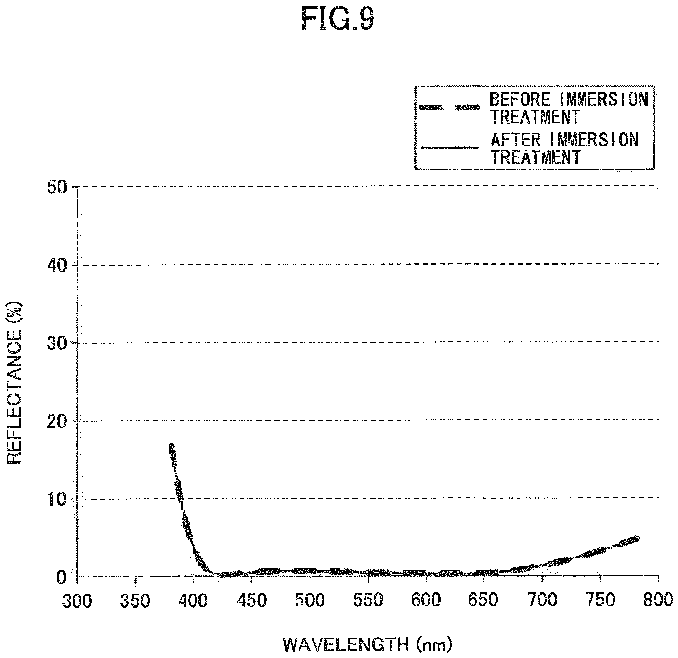

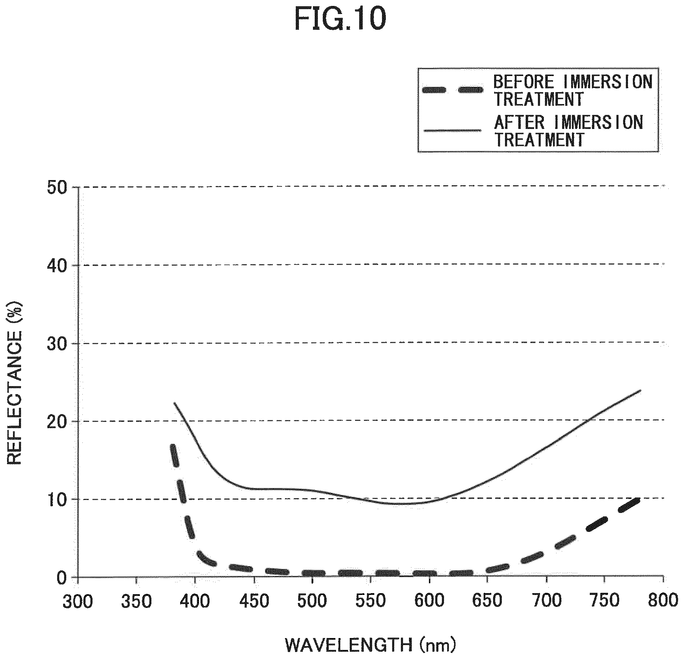

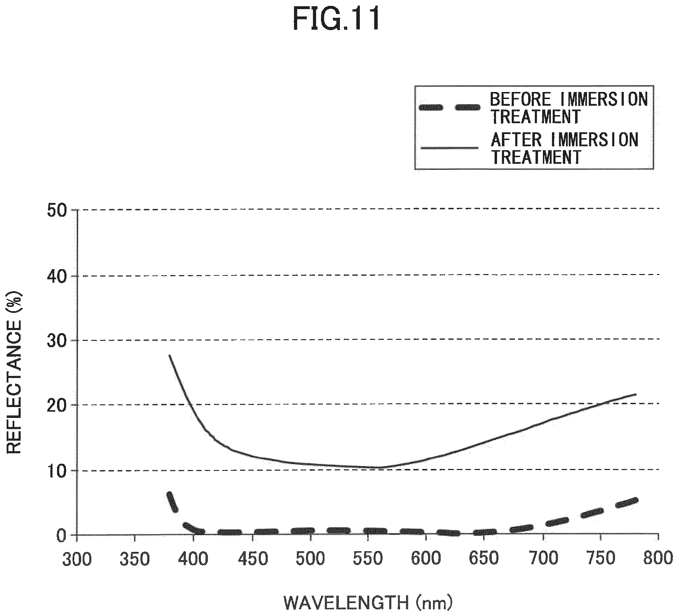

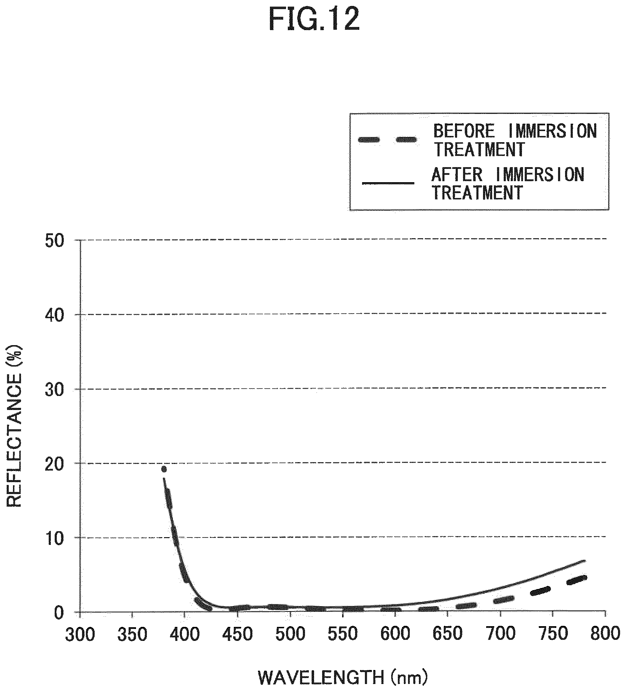

FIG. 8 and FIG. 9 illustrate results of measurement of reflectance before and after the immersion treatment, obtained for Sample 1 and Sample 2, respectively. Moreover, FIG. 10 and FIG. 11 illustrate results of measurement of reflectance before and after the immersion treatment, obtained for Sample 6 and Sample 7, respectively. In addition, FIG. 12 illustrates results of measurement of reflectance before and after the immersion treatment, obtained for Sample 9.

Furthermore, TABLE 1 shows values of the index $\Sigma|\Delta R|$ obtained for the respective samples as a whole.

As illustrated in FIG. 8, for Sample 1, reflection characteristics before and after the immersion treatment almost coincide with each other, and a notable difference could not be found between both reflectances. That is, it was found that Sample 1, in either case of before or after the immersion treatment, over the wavelength range of about 400 nm to about 700 nm, exhibited sufficiently low reflectance. Note that for Sample 1, the index $\Sigma|\Delta R|$ was 9.4.

Similarly, from FIG. 9, also for Sample 2, a significant change in reflectance could not be found between before and after the immersion treatment. For Sample 2, the index $\Sigma|\Delta R|$ was 4.8.

For Samples 3 to 5, not illustrated in drawings, almost the same results as above were obtained.

However, for Sample 6, as illustrated in FIG. 10, a notable difference in the reflection characteristic between before and after the immersion treatment was found. That is, it was found that although Sample 6 exhibited an excellent low reflectance before the immersion treatment, the reflectance increases after the immersion treatment over the wavelength range of 380 nm to 780 nm. In the case of Sample 6, the index $\Sigma|\Delta R|$ was 2260.8.

Moreover, also for Sample 7, as illustrated in FIG. 11, in the same way as the case of Sample 6, a notable difference in the reflectance between before and after the immersion treatment was found. In the case of Sample 7, the index $\Sigma|\Delta R|$ was 2681.6.

Also in the case of Sample 8, almost the same result as Sample 6 and Sample 7 was obtained. In the case of Sample 8, the index $\Sigma|\Delta R|$ was 3067.0.

However, in Sample 9, as illustrated in FIG. 12, a slight difference in the reflection characteristic on the longer wavelength side between before and after the immersion treatment was identified. Possible causes include that although the average hydrogen concentration $C_{av}$ of the fourth layer of Sample 9 was less than 10 atomic%, the thickness of the fourth layer of Sample 8 was thinner compared with Samples 1 to 5. For Sample 9, the index $\Sigma|\Delta R|$ was 174.9.

In this way, it was found that for Samples 1 to 5, the index $\Sigma|\Delta R|$ was sufficiently low, and an excellent resistance to alkali was exhibited. Moreover, it was confirmed that for Samples 6 to 8, the index $\Sigma|\Delta R|$ increased extremely, and Samples 6 to 8 did not exhibit an excellent resistance to alkali. However, for Sample 9, it was found that although the index $\Sigma|\Delta R|$ was greater compared with Samples 1 to 5, the resistance to alkali was not a practically problematic level, as illustrated in FIG. 12.

As described above, it was confirmed that when the average hydrogen concentration $C_{av}$ included in the fourth layer is less than 10 atomic%, a glass with antireflection film including such a laminated film had an excellent resistance to alkali.

Moreover, it was confirmed that when a proportion of the thickness of the fourth layer with respect to a sum of the thicknesses of the third layer and the fourth layer was 0.2 or more, the resistance of the laminated film to alkali was more improved.

(Visible light reflectance)

It can be said that the smaller a visible light reflectance of a glass with antireflection film is, the more excellent a low reflection characteristic is.

In a state where a laminated film is formed only on one surface of a glass substrate and the other surface is subjected to a surface roughening treatment, when a visible light reflectance of the glass with antireflection film measured based on ISO 9050:2003 (JIS R 3106) exceeds 1%, the low reflection characteristic is insufficient. The visible light reflectance is preferably 1% or less.

In a state where laminated films are formed on both surfaces of the glass substrate, when the visible light reflectance of the glass with antireflection film measured based on ISO 9050:2003 (JIS R 3106) exceeds 2%, the low reflection characteristic is insufficient. The visible light reflectance is preferably 2% or less. Especially, the visible light reflectance is more preferably 1% or less.

For the respective samples, the visible light reflectance before the alkali immersion treatment, was 0.25% for Sample 1, 0.32% for Sample 2, 0.28% for Sample 3, 0.27% for Sample 4, 0.18% for Sample 5, 0.45% for Sample 6, 0.43% for Sample 7, 0.06% for Sample 8, and 0.26% for Sample 9. Therefore, it can be said that all of the samples have excellent low reflection characteristics.

INDUSTRIAL APPLICABILITY

The present invention can be applied, for example, to glasses with antireflection film for buildings. The application form is not limited to a form of arranging an antireflection film only on one surface of a glass substrate, and a form of arranging antireflection films on both surfaces of a glass substrate. For example, two glass substrates, having an antireflection film only on one surface respectively, may be prepared to form a laminated glass. Moreover, two glass substrates, having antireflection films on both surfaces respectively, may be prepared to form a multilayered glass. Alternatively, an antireflection film may be arranged on one surface of a glass substrate and a film having a different effect may be arranged on the other surface.

REFERENCE SIGNS LIST

100 first glass with antireflection film according to the present invention
120 glass substrate
122 first surface
124 second surface
130 laminated film
140 first layer
145 second layer
155 third layer
160 fourth layer
200 second glass with antireflection film according to the present invention
220 glass substrate
222 first surface
224 second surface
230 laminated film
240 first layer
245 second layer
255 third layer
260 fourth layer
300 third glass with antireflection film according to the present invention
320 glass substrate
322 first surface
324 second surface

330 laminated film
340 first layer
345 second layer
350 fifth layer
355 third layer
360 fourth layer
400 fourth glass with antireflection film according to the present invention
420 glass substrate
422 first surface
424 second surface
430 laminated film
440 first layer
445 second layer
450 fifth layer
455 third layer
460 fourth layer
500 fifth glass with antireflection film according to the present invention
520 glass substrate
522 first surface
524 second surface
530 first laminated film
540 first layer (first laminated film)
545 second layer (first laminated film)
550 fifth layer (first laminated film)
555 third layer (first laminated film)
560 fourth layer (first laminated film)
565 second laminated film
570 first layer (second laminated film)
575 second layer (second laminated film)
580 fifth layer (second laminated film)
585 third layer (second laminated film)
590 fourth layer (second laminated film)

## Claims

1. A glass with antireflection film comprising:

   a glass substrate having a first surface and a second surface; and
   a first laminated film arranged on the first surface of the glass substrate, wherein the first laminated film has an antireflection function,
   wherein the first laminated film has at least four layers including a first layer, a second layer, a third layer, and a fourth layer, in order of proximity to the first surface of the glass substrate,
   wherein the second layer is arranged adjacent to the first layer, and has a refractive index that is different from a refractive index of the first layer,
   wherein the third layer does not include zirconia, is configured with a layer mainly including silica, and is arranged immediately below the fourth layer,
   wherein the fourth layer is configured with zirconia-doped silica, and has average hydrogen concentration $C_{av}$ that is less than 10 atomic%,
   wherein the average hydrogen concentration $C_{av}$ of the fourth layer is calculated by depositing a carbon film of 5 nm on the laminated film, measuring hydrogen concentration in a depth direction by a HR-ERDA method, and averaging values obtained in a range of depth of 10 nm to 15 nm from a surface of the fourth layer,
   wherein the first laminated film further includes a fifth layer between the second layer and the third layer, and
   wherein the fifth layer has a refractive index that is greater than the refractive index of the second layer and is greater than a refractive index of the third layer.

2. The glass with antireflection film according to claim 1,
   wherein a proportion of a thickness of the fourth layer with respect to a sum of thicknesses of the third layer and the fourth layer is 0.2 or more.

3. The glass with antireflection film according to claim 1 or 2,
   wherein the fourth layer includes zirconia of 5 mol% to 50 mol%.

4. The glass with antireflection film according to any one of claims 1 to 3,
   wherein in a state where the second surface of the glass substrate is subjected to a surface roughening treatment,
   a visible light reflectance of the glass with antireflection film measured from the first laminated film side based on
   ISO 9050:2003 is 1 % or less.

5. The glass with antireflection film according to any one of claims 1 to 4, further comprising a second laminated film
   on the second surface of the glass substrate.

6. The glass with antireflection film according to claim 5,
   wherein the second laminated film has the same layer configuration as the first laminated film.

7. The glass with antireflection film according to claim 5 or 6,
   wherein a visible light reflectance of the glass with antireflection film measured from the first laminated film side
   based on ISO 9050:2003 is 2% or less.

**Patentansprüche**

1. Glas mit Antireflexionsfilm, umfassend:

   ein Glassubstrat mit einer ersten Oberfläche und einer zweiten Oberfläche; und
   einen ersten laminierten Film, angeordnet auf der ersten Oberfläche des Glassubstrats,
   wobei der erste laminierte Film eine Antireflexionsfunktion aufweist,
   wobei der erste laminierte Film mindestens vier Schichten, einschließend eine erste Schicht, eine zweite Schicht,
   eine dritte Schicht und eine vierte Schicht in der Reihenfolge der Nähe zur ersten Oberfläche des Glassubstrats,
   aufweist,
   wobei die zweite Schicht an die erste Schicht angrenzend angeordnet ist und einen Brechungsindex, der sich
   von einem Brechungsindex der ersten Schicht unterscheidet, aufweist,
   wobei die dritte Schicht kein Zirkoniumoxid einschließt, mit einer Schicht, die hauptsächlich Siliziumoxid einschließt, konfiguriert ist und unmittelbar unterhalb der vierten Schicht angeordnet ist,
   wobei die vierte Schicht mit Zirkoniumoxid-dotiertem Siliziumoxid konfiguriert ist und eine gemittelte Wasser-
   stoffkonzentration $C_{av}$, die weniger als 10 Atom-% beträgt, aufweist,
   wobei die gemittelte Wasserstoffkonzentration $C_{av}$ der vierten Schicht durch Abscheiden eines Kohlenstofffilms
   von 5 nm auf dem laminierten Film, Messen einer Wasserstoffkonzentration in einer Tiefenrichtung durch ein
   HR-ERDA-Verfahren und Mitteln von Werten, erhalten in einem Tiefenbereich von 10 nm bis 15 nm von einer
   Oberfläche der vierten Schicht, berechnet wird,
   wobei der erste laminierte Film weiter eine fünfte Schicht zwischen der zweiten Schicht und der dritten Schicht
   einschließt, und
   wobei die fünfte Schicht einen Brechungsindex, der größer als der Brechungsindex der zweiten Schicht ist und
   größer als ein Brechungsindex der dritten Schicht ist, aufweist.

2. Glas mit Antireflexionsfilm nach Anspruch 1,
   wobei ein Anteil einer Dicke der vierten Schicht in Bezug auf eine Summe von Dicken der dritten Schicht und der
   vierten Schicht 0,2 oder mehr beträgt.

3. Glas mit Antireflexionsfilm nach Anspruch 1 oder 2,
   wobei die vierte Schicht 5 mol% bis 50 mol% Zirkoniumoxid einschließt.

4. Glas mit Antireflexionsfilm nach einem der Ansprüche 1 bis 3,
   wobei in einem Zustand, wo die zweite Oberfläche des Glassubstrats einer Behandlung zum Aufrauen der Oberfläche
   unterzogen wird, ein Reflexionsvermögen sichtbaren Lichts des Glases mit Antireflexionsfilm, gemessen von der
   Seite des ersten laminierten Films auf Basis von ISO 9050:2003, 1% oder weniger beträgt.

**5.** Glas mit Antireflexionsfilm nach einem der Ansprüche 1 bis 4, weiter umfassend einen zweiten laminierten Film auf der zweiten Oberfläche des Glassubstrats.

**6.** Glas mit Antireflexionsfilm nach Anspruch 5,
wobei der zweite laminierte Film die gleiche Schichtkonfiguration wie der erste laminierte Film aufweist.

**7.** Glas mit Antireflexionsfilm nach Anspruch 5 oder 6,
wobei ein Reflexionsvermögen sichtbaren Lichts des Glases mit Antireflexionsfilm, gemessen von der Seite des ersten laminierten Films auf Basis von ISO 9050:2003, 2% oder weniger beträgt.

**Revendications**

**1.** Verre avec un film antireflet, comprenant :

un substrat en verre présentant une première surface et une seconde surface ; et
un premier film stratifié disposé sur la première surface du substrat en verre,
dans lequel le premier film stratifié possède une fonction antireflet,
dans lequel le premier film stratifié comprend au moins quatre couches comprenant une première couche, une deuxième couche, une troisième couche et une quatrième couche, par ordre de proximité avec la première surface du substrat en verre,
dans lequel la deuxième couche est disposée de manière adjacente à la première couche, et possède un indice de réfraction qui est différent d'un indice de réfraction de la première couche,
dans lequel la troisième couche ne comprend pas d'oxyde de zirconium, est configurée avec une couche comprenant principalement de la silice et est disposée immédiatement sous la quatrième couche,
dans lequel la quatrième couche est configurée avec de la silice dopée avec de l'oxyde de zirconium, et a une concentration moyenne d'hydrogène $C_{av}$ qui est inférieure à 10 %at,
dans lequel la concentration moyenne d'hydrogène $C_{av}$ de la quatrième couche est calculée par dépôt d'un film de carbone de 5 nm sur le film stratifié, mesure de la concentration d'hydrogène dans une direction de la profondeur au moyen d'une méthode HR-ERDA (analyse par détection du recul élastique en haute résolution), et moyennage de valeurs obtenues dans une plage de profondeur de 10 nm à 15 nm depuis une surface de la quatrième couche,
dans lequel le premier film stratifié comprend en outre une cinquième couche entre la deuxième couche et la troisième couche, et
dans lequel la cinquième couche possède un indice de réfraction qui est supérieur à l'indice de réfraction de la deuxième couche et qui est supérieur à un indice de réfraction de la troisième couche.

**2.** Verre avec un film antirefle, selon la revendication 1,
dans lequel une proportion d'une épaisseur de la quatrième couche par rapport à une somme des épaisseurs de la troisième couche et de la quatrième couche est supérieure ou égale à 0,2.

**3.** Verre avec un film antireflet selon la revendication 1 ou 2,
dans lequel la quatrième couche comprend de l'oxyde de zirconium à raison de 5 %mol à 50 %mol.

**4.** Verre avec un film antireflet selon l'une quelconque des revendications 1 à 3,
dans lequel dans un état où la deuxième surface du substrat en verre est soumise à un traitement de rugosification, une réflectance à la lumière visible du verre avec le film antireflet, mesurée à partir du côté du premier film stratifié sur la base de la norme ISO 9050:2003, est inférieure ou égale à 1 %.

**5.** Verre avec un film antireflet selon l'une quelconque des revendications 1 à 4, comprenant en outre un second film stratifié sur la seconde surface du substrat en verre.

**6.** Verre avec un film antireflet selon la revendication 5,
dans lequel le second film stratifié possède la même configuration de couches que le premier film stratifié.

**7.** Verre avec un film antireflet selon la revendication 5 ou 6,
dans lequel une réflectance à la lumière visible du verre avec le film antireflet, mesurée à partir du côté du premier film stratifié sur la base de la norme ISO 9050:2003, est inférieure ou égale à 2 %.

# FIG.1

# FIG.2

# FIG.3

# FIG.4

# FIG.5

500

560
555
550
545
540
} 530

522
524
520

570
575
580
585
590
} 565

# FIG.6

# FIG.7

# FIG.8

# FIG.9

# FIG.10

Legend:
- – – BEFORE IMMERSION TREATMENT
- —— AFTER IMMERSION TREATMENT

Y-axis: REFLECTANCE (%)
X-axis: WAVELENGTH (nm)

# FIG.11

# FIG.12

| | |
|---|---|
| – – | BEFORE IMMERSION TREATMENT |
| —— | AFTER IMMERSION TREATMENT |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005030663 A